# EUROPEAN PATENT SPECIFICATION

(11) **EP 1 788 262 B1**
(45) Date of publication and mention of the grant of the patent: **16.07.2008**
(21) Application number: 06124087.5
(22) Date of filing: 14.11.2006
(51) Int. Cl.: F16C 9/02, F02F 7/00

(54) **Crankshaft bearing assembly**
Kurbelwellenlagereinrichtung
Palier de vilebrequin

(30) Priority: 14.11.2005 EP 05110703
(43) Date of publication of application: 23.05.2007
(73) Proprietor: BRP-Rotax GmbH & Co. KG, 4623 Gunskirchen (AT)
(72) Inventor: Hochmayr, Markus, 4613 Krenglbach (AT); Glisner, Karl, 4600 Wels (AT)
(74) Representative: Solf, Alexander

(56) References cited:
- US-A- 2 025 297
- US-A- 3 089 735
- US-A- 4 651 691
- PATENT ABSTRACTS OF JAPAN vol. 2000, no. 15, 6 April 2001 (2001-04-06) -& JP 2000 337348 A (TOYOTA MOTOR CORP), 5 December 2000 (2000-12-05)

## Description

### CROSS REFERENCES TO RELATED APPLICATIONS

The present Patent Application claims priority from European Patent Application No. 05110703.5, filed November 14, 2005.

### FIELD OF THE INVENTION

The present invention relates generally to crankshaft bearings for internal combustion engines and in particular to crankshaft friction bearings for internal combustion engines.

### BACKGROUND OF THE INVENTION

For light vehicles, engine blocks and their main bearing caps are increasingly made from cast aluminum for their weight-saving potential. However cast aluminum engine blocks and main bearing caps are typically bulkier than their cast iron counterparts to compensate for the substantially inferior tensile strengths typically displayed by cast aluminum parts thereby negating some of the weight saving advantage previously mentioned. To alleviate this problem, engine manufacturers have combined cast aluminum engine blocks with cast iron main bearing caps. However, the use of cast iron main bearing caps with aluminum engine cylinder blocks or crankcases requires more complex and difficult machining and increases the weight of the engine.

Thus, there is a need for a crankshaft bearing assembly that alleviates some of the drawbacks of conventional crankshaft bearing assembly and improves the durability of the engine in which the crankshaft bearing assembly is used.

The closest prior art is represented by US 4 651 691, disclosing a crankshaft bearing divided into two halves, both being made of aluminum alloy.

### STATEMENT OF THE INVENTION

The present invention as defined in claim 1 provides a crankshaft bearing assembly for a cast aluminum engine in which at least one bearing cap is made of an aluminum having a tensile strength higher than the tensile strength of the aluminum of the engine or crankcase.

According to the present invention there is provided a crankshaft bearing assembly for supporting a crankshaft for rotation about a crankshaft axis within an engine having a crankcase, the crankshaft bearing assembly including at least one crankshaft bearing divided into a first half and a second half, the first half being integral with the crankcase, and the second half being a bearing cap connectable to the crankcase; the crankcase being made of a first aluminum alloy having a first tensile strength and the bearing cap being made of a second aluminum alloy having a second tensile strength higher than the first tensile strength, the second tensile strength of the second aluminum alloy being at least 300 MPa.

In a preferred aspect, the first aluminum alloy is a cast alloy and the second aluminum alloy is a wrought alloy. In an additional preferred aspect, the first half of the bearing is made by casting and the second half of the bearing is made by forging.

In a further preferred aspect, the first aluminum alloy possesses a tensile strength of at most 250 MPa and the second aluminum alloy possesses a tensile strength of a least 350 MPa.

In an additional preferred aspect, the crankshaft bearing includes a bearing bore, the bearing bore being split by the division of the crankshaft bearing and bearing bushings are disposed within the bearing bore.

In a further preferred aspect, the crankshaft bearing includes a first crankshaft bearing having a first bearing cap and a second crankshaft bearing having a second bearing cap, the first and the second bearing cap being made in one piece.

In a further preferred aspect of the present invention, the crankcase includes lateral extensions disposed on each sides of the bearing cap, the bearing cap being bolted to the lateral extensions of the crankcase.

In an additional preferred aspect of the invention, the crankshaft bearing assembly further comprises a crankcase lower half, at least one of an end bearing cap being integral with the crankcase lower half.

Another aspect of the present invention is to provide an internal combustion engine comprising the above crankshaft bearing assembly in which at least one bearing cap is made of an aluminum having a tensile strength higher than the tensile strength of the aluminum of the crankcase, the internal combustion engine having at least two cylinders and a power unit case having a crankcase and an integral transmission housing accommodating at least a transmission shaft.

In an additional aspect, the invention provides a motorcycle having an internal combustion chamber, the internal combustion engine having at least two cylinders, a crankshaft and a crankshaft bearing assembly for supporting the crankshaft within a power unit case having a crankcase and an integral transmission housing accommodating at least a transmission shaft; the crankshaft bearing assembly including at least one crankshaft bearing divided into a first half and a second half, the first half being integral with the crankcase, and the second half being a bearing cap connectable to the crankcase; the crankcase being made of a first aluminum alloy having a first tensile strength and the bearing cap being made of a second aluminum alloy having a second tensile strength higher than the first tensile strength, the second tensile strength of the second aluminum alloy being at least 300 MPa.

A further aspect of the invention of the present invention is to provide an All Terrain Vehicle (ATV) having an internal combustion chamber, the internal combustion engine having at least two cylinders, a crankshaft and a crankshaft bearing assembly for supporting the crankshaft within a power unit case having a crankcase and an integral transmission housing accommodating at least a transmission shaft; the crankshaft bearing assembly including at least one crankshaft bearing divided into a first half and a second half, the first half being integral with the crankcase, and the second half being a bearing cap connectable to the crankcase; the crankcase being made of a first aluminum alloy having a first tensile strength and the bearing cap being made of a second aluminum alloy having a second tensile strength higher than the first tensile strength, the second tensile strength of the second aluminum alloy being at least 300 MPa.

Embodiments of the present invention each have at least one of the above-mentioned aspects, but not necessarily have all of them.

Additional and/or alternative features, aspects and advantages of the embodiments of the present invention will become apparent from the following description, the accompanying drawings and the appended claims.

### BRIEF DESCRIPTION OF THE DRAWINGS

For a better understanding of the present invention as well as other aspects and further features thereof, reference is made to the following description which is to be used in conjunction with the accompanying drawings, where:

FIG. 1 is a longitudinal cross-sectional view of a crankshaft mounted into a crankcase of an internal combustion engine via a crankshaft bearing assembly in accordance with one embodiment of the invention;

FIG. 2 is a cross-sectional view of a crankshaft bearing assembly taken at line A-A of Figure 1.

FIG.3 is a side elevational view of an internal combustion engine incorporating a crankshaft bearing assembly in accordance with one embodiment of the invention;

FIG. 4 is a side elevational view of a motorcycle having an internal combustion engine as shown in FIG.3; and,

FIG.5 a side elevational view of a All-Terrain Vehicle (ATV) having an internal combustion engine as shown in FIG. 3.

### DESCRIPTION OF PREFERRED EMBODIMENT(S)

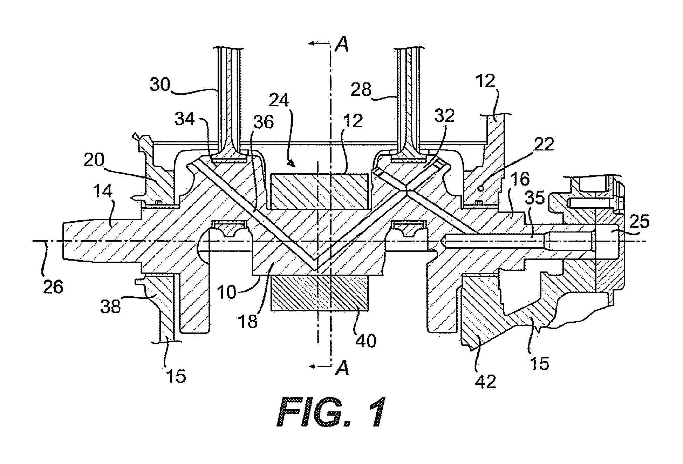

With reference to FIG. 1, a crankshaft 10 is shown supported within the crankcase of an internal combustion engine, the lower portion of the crankcase being defined by a lower crankcase half 15 (shown partially). The crankshaft 10 is mounted onto the lower portion of the crankcase upper half 12 for rotational movement via three main bearing assemblies 20, 22 and 24 so as to rotate about a shaft axis 26. The crankcase upper half 12 in this particular embodiment is the bottom portion of the cylinder block itself. In other embodiment, the crankcase upper half may separate from the cylinders. The end journals 14, 16 of the crankshaft 10 are supported for rotation by the main bearing assemblies 20, 22 while the central main journal 18 is supported by the main bearing assembly 24. Two pistons (not shown) with corresponding connecting rods 28 and 30 are respectively connected to the rod journals 32 and 34 of the crankshaft 10 so as to be able to rotate thereon and impart rotational motion to the crankshaft 10. The upper halves of the main bearing assemblies 20, 22 and 24 are machined from the crankcase upper half 12 and are therefore integral with the latter. The lower halves 38, 40 and 42 of the main bearing assemblies 20, 22 and 24 consist of bearing caps bolted or otherwise secured to the crankcase upper half 12 in alignment with the upper halves of the main bearing assemblies 20, 22 and 24 thereby enveloping the crankshaft journals 14, 16 and 18 and securing the crankshaft 10 to the crankcase. The upper halves and the lower halves 38, 40 and 42 of the main bearing assemblies 20, 22 and 24 together defined crankshaft bearing bores.

Lubricating oil is routed to the main journals 14, 16 and 18 of the crankshaft 10 and therefore to the main bearing assemblies 20, 22 and 24 through an internal conduit 36 in the crankshaft 10 to provide adequate lubricant to the main bearing assemblies 20, 22 and 24. The lubricating oil enters from a pressurized oil chamber 25 into the main conduit 35 and is directed to the internal conduit 36 leading to the main bearing assemblies 20, 22 and 24.

The crankcase upper half 12 is made of a first cast aluminum having a tensile strength of about 200MPa and at most 250MPa whereas the bearing cap 40 is made of a wrought aluminum alloy having a tensile strength of at least 300MPa and is able to sustain the heavy stresses applied to the main bearing assembly 24 located in the center of the engine. Cast aluminum alloys typically have high Si content, whereas wrought aluminum alloys typically have low Si content and higher tensile strength. In a specific embodiment, the bearing cap 40 is made of a wrought aluminum alloy having a tensile strength of at least 350MPa. The bearing cap 40 can also be made from a cast aluminum alloy that has been forged giving is under tensile strength of at least 300MPa and upward of 350MPa.

In the embodiment illustrated in FIG. 1, the lower halves 38 and 42 of end bearing assemblies 20, 22 are machined from the lower crankcase half 15 and are therefore integral therewith. The crankcase lower half 15 is made of a cast aluminum similar to the crankcase upper half 12 having a tensile strength of about 200MPa.

In another embodiment (not shown), the lower halves 38 and 42 of end bearing assemblies 20, 22 are bearing caps similar to the bearing cap 40 are made of wrought or forged aluminum alloy having a tensile strength of at least 300MPa.

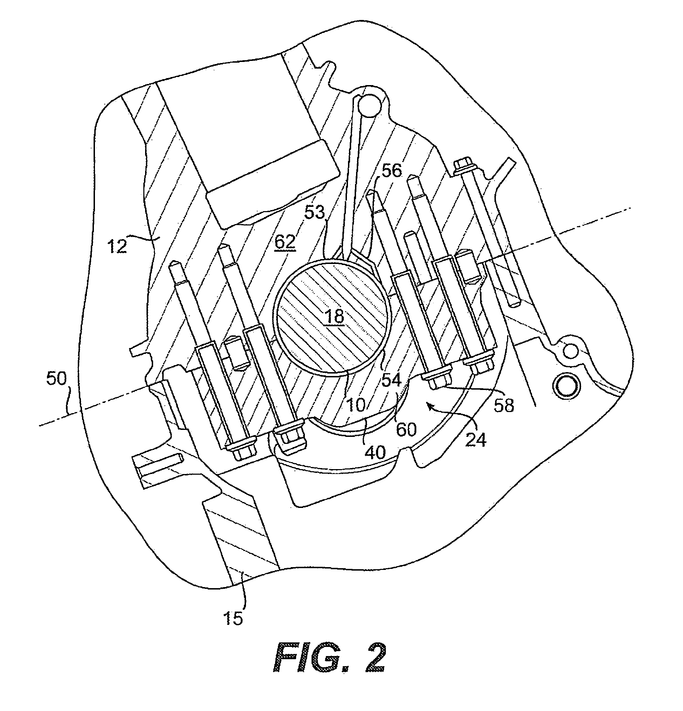

With reference to FIG.2. which is a cross section of the main bearing assembly 24, it can be seen that the crankcase is divided essentially horizontally on a separating plane 50, the upper portion being defined by the crankcase upper half 12 and the lower portion being defined by the crankcase lower half 15 The main bearing assembly 24 consists of an upper bearing surface 53 machined directly into the crankcase upper half 12 and a lower bearing surface 54 defined by the inner surface of the bearing cap 40. Between the upper and lower bearing surfaces 53 and 54 and the crankshaft journal 18, there is a small clearance gap 56 to allow ingress of lubricating oil and room to allow a thin oil film to form to improve running characteristics of the crankshaft 10 within the main bearing assembly 24. The lubricating oil is introduced into the bearing gap 56 through the internal conduit 36 of the crankshaft 10 as previously described.

Although not shown in FIG. 2, a pair of bearing bushings may be disposed on the upper and lower bearing surfaces 53 and 54 and fitted within the bearing bore of the bearing assembly 24 in between the bearing surfaces and the crankshaft journal 18 as is well known in the art of engine design.

As illustrated in FIG. 2, the lower half 60 of the main bearing assembly 24 is in the form of a bearing cap 40 secured onto the cylinder block 12 by means of at least one bolt 58. In the embodiment that is shown, a total of four bolts 58 are used to secure the bearing cap 40 to the cylinder block 12. In a specific embodiment not shown, the crankcase may have lateral extensions or web such that the bearing cap 40 is inserted in between the extensions and secured to the extensions by a set of transversal bolts.

In this particular embodiment, the upper half 62 of the main bearing assembly 24 is machined from the crankcase upper half 12 and is integral with the crankcase upper half 12. The upper half 62 is therefore made of the same cast aluminum as the crankcase upper half 12 and has a tensile strength of at least 200MPa. In another embodiment, the crankcase upper half 12 is made of a higher grade cast aluminum having a tensile strength of at least 250MPa. On the other hand, the bearing cap 40 which is the lower half 60 of the main bearing assembly 24 is made of a wrought aluminum alloy having a tensile strength of at least 300MPa. Since the upper half 62 of the main bearing assembly 24 is machined directly into the crankcase upper half 12, it is much more voluminous than the bearing cap 40 and as such it is much stronger and does not require to be made of an aluminum having high tensile strength. The bearing cap 40 on the other hand is a small component that, if constructed from a similar cast aluminum as the crankcase upper half 12, would have to be oversized to withstand the large forces exerted on the main bearing assembly 24. If the bearing cap 40 were constructed from a similar cast aluminum as the crankcase upper half 12, the weight reduction potential of using aluminum would be offset by the oversize requirement. The use of a bearing cap 40 made of wrought aluminum alloy having a tensile strength of at least 300MPa allows the bearing cap 40 to be smaller and therefore lighter and yet able to withstand the large forces exerted on the main bearing, assembly 24. The use of a bearing cap 40 made of aluminum alloy that has been forged and having a tensile strength of at least 300MPa allows the bearing cap 40 to be smaller and therefore lighter and yet able to withstand the large forces exerted on the main bearing assembly 24.

In another embodiment (not shown), the lower halves 38 and 42 of end bearing assemblies 20, 22 (FIG. 1) are bearing caps similar to the bearing cap 40 and are made of wrought or forged aluminum alloys having a tensile strength of at least 300MPa. The upper halves of the end bearing assemblies 20, 22 being machined directly into the crankcase upper half 12 are more voluminous and do not require to be made of an aluminum having higher tensile strength. The bearing caps on the other hand are small components made of a higher tensile strength than the upper halves such that they can be made smaller and lighter yet able to withstand the large forces exerted on the main bearing assemblies 20 and 22.

In yet another embodiment, the engine includes four or five main bearing assemblies in accordance with the invention having bearing caps of higher tensile strength aluminum than the upper halves machined into the cast aluminum crankcase. The bearing caps may be constructed as units including two or more bearing caps made of a single piece. In this way, the bearing caps may be secured or bolted to the upper halves as a unit.

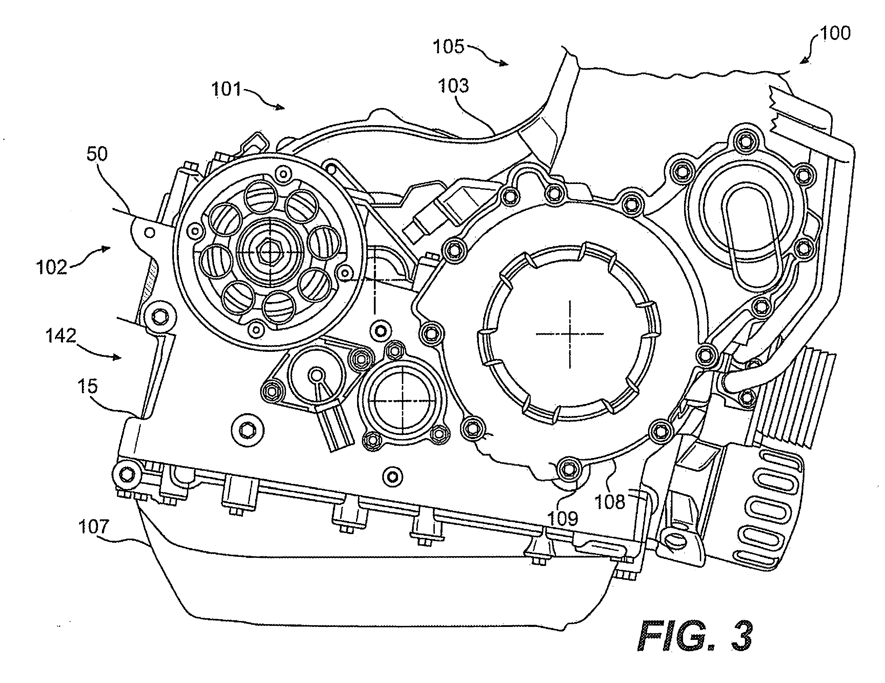

With reference to FIG. 3, an internal combustion engine 100 has an power unit case 101. The power unit case 101 includes a crankcase 102 that is divided into a cylinder block portion 103, which includes the upper part of the crankcase 102 and a cylinder block 105, and a lower crankcase half 15 along a separating plane 50. An oil sump 107 is secured to the lower crankcase half 15. A cylinder head assembly (not shown) sits atop the cylinder block 105. The cylinder block 105 has two cylinders (not shown) inside each of which a piston reciprocates. Each of the pistons together with the side wall of its corresponding cylinder and the corresponding portion of the cylinder head assembly forms a combustion chamber (not shown). Since the internal combustion engine 100 of the present invention is preferably a four-cycle engine, at least one intake valve per cylinder (not shown) and at leas one exhaust valve per cylinder (not shown) are provided in file cylinder head assembly. Two intake valves and two exhaust valves per cylinder are preferably provided. A single overhead camshaft (not shown) disposed in the cylinder head assembly and operatively connected to the crankshaft 10, controls the actuation of the intake and exhaust valves. It is contemplated that two overhead camshafts (one for the intake valves and one for the exhaust valves) could be used. A fuel injector (not shown) and a spark plug (not shown) per cylinder are also provided in the cylinder head assembly. A pair of throttle bodies (one per cylinder) are used to regulate the quantity of air entering the combustion chambers. An air intake manifold (not shown) or an airbox (not shown) or both, are provided upstream of and in fluid communication with the throttle bodies. An exhaust manifold (not shown) in fluid communication with each combustion chamber is provided on the side of the cylinder block. The exhaust manifold is in fluid communication with the exhaust system of the vehicle incorporating the engine 100. It would be understood that the engine 100 also has other elements and systems not specifically shown and/or described in the present application. These can include, but are not limited to, a starter motor, an oil filter, a cooling system, an electrical system, and a fuel injection system.

The power unit case 101 also includes an integrated transmission housing 142 which can be made in integrally with the crankcase 102 or fastened to the crankcase 102, with bolts for example. The side part of the power unit case 101 has a first housing cover 108 that is secured by at least one fastener 109, such as a screw, to the crankcase 102. When mounted, the first housing cover 108 forms part of the power unit case 101. In the present embodiment, the first housing cover 108 is an ignition cover which can be removed to provide access to an ignition chamber located in the space inside the power unit case 101 within which the ignition system or generator-ignition system is located. The ignition chamber can be part of the crankcase 102 or can be partially separated from the crankcase 102.

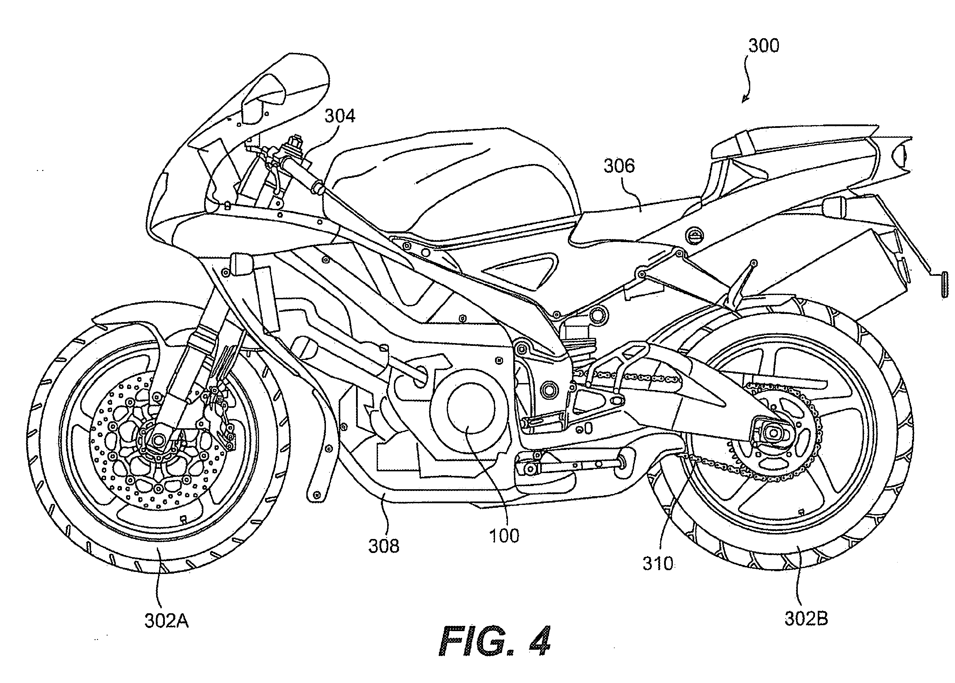

The internal combustion engine 100 can be used to power a motorcycle 300, as shown in fig. 4. The motorcycle 300 has two wheels 302a, 302b, a handlebar 304 to steer the front wheel 302a, and a straddle-type seat 306. The engine 100 is mounted to the frame 308 of the motorcycle 300 below the seat 306. The engine 100 powers the motorcycle 300 by having the output shaft of the transmission operatively connected to the rear wheel 302b via a chain 310. The crankshaft bearing assembly in accordance with the present invention enable the designer of the motorcycle 300 to reduce the weight of the motorcycle thereby improving the ratio weight/power.

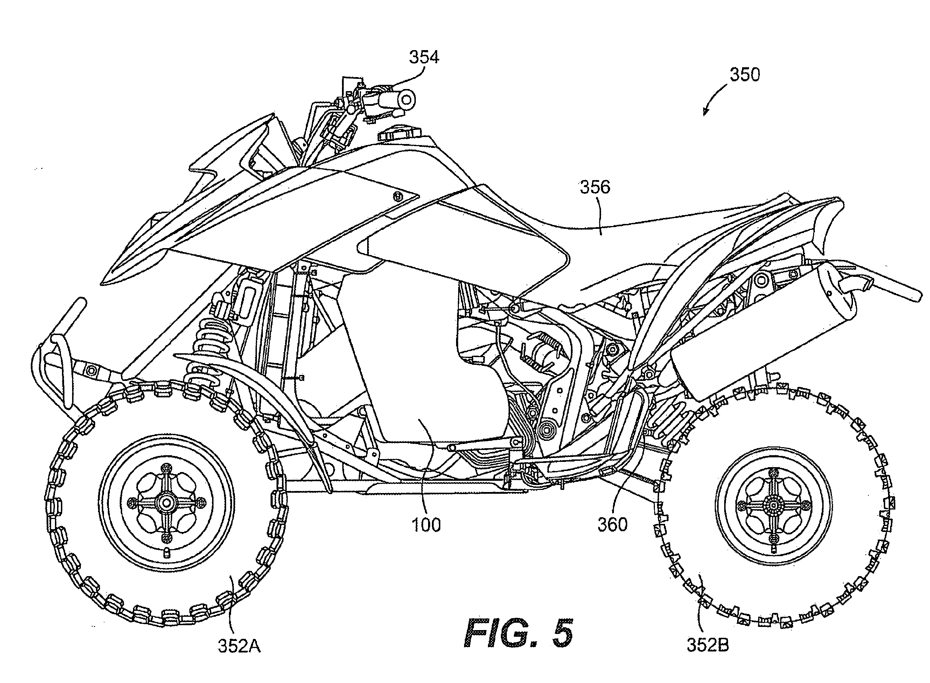

The internal combustion engine 100 can also be used to power an all-terrain vehicle (ATV) 350, as shown in fig. 5. The ATV 350 has two front wheels 352a, two rear wheels 352b, a handlebar 354 to steer the two front wheels 352a, and a straddle-type seat 356. The engine 100 is mounted to the frame 358 of the ATV 350 below the seat 356. The engine 100 powers the ATV 350 by having the output shaft of the transmission operatively connected to the two rear wheels 352b via a chain 360. The crankshaft bearing assembly in accordance with the present invention enable the designer of the ATV 350 to reduce the weight of the ATV thereby improving the ratio weight/power.

The crankshaft bearing assembly in accordance with the present invention is suitable for use in internal combustion engines including those used to power various motorized recreational vehicles, such as motorcycles, small off-road vehicles (ATV, quads), personal watercrafts (PWC), snowmobiles, sport boats, inboard and outboard engines, aircraft, karts, and small utility vehicles.

Modifications and improvement to the above described embodiments of the present invention may become apparent to those skilled in the art. The foregoing description is intended to be exemplary rather than limiting. Furthermore, the dimensions of features of various components that may appear on the drawings are not meant to be limiting, and the size of the components therein can vary from the size that may be portrayed in the figures herein. The scope of the present invention is therefore intended to be limited solely by the scope of the appended claims.

## Claims

1. A crankshaft bearing assembly (20, 22, 24) for supporting a crankshaft (10) for rotation about a crankshaft axis (26) within an engine (100) having a crankcase (102), the crankshaft bearing assembly (20, 22, 24) including at least one crankshaft bearing (24) divided into a first half (12) and a second half (40), the first half (12) being integral with the crankcase (102), and the second half (40) being a bearing cap connectable to the crankcase (102); **characterized in that** the crankcase (102) is made of a first aluminum alloy having a first tensile strength and the bearing cap (40) is made of a second aluminum alloy having a second tensile strength higher than the first tensile strength, the second tensile strength of the second aluminum alloy being at least 300 MPa.

2. A crankshaft bearing assembly as defined in claim 1, wherein the first aluminum alloy is a cast alloy and the second aluminum alloy is a wrought alloy.

3. A crankshaft bearing assembly as defined in claim 1, wherein the first half of the bearing is made by casting and the second half of the bearing is made by forging.

4. A crankshaft bearing assembly as defined in any one of claims 1 to 3, wherein the second aluminum alloy possesses a tensile strength of a least 350 MPa.

5. A crankshaft bearing assembly as defined in any one of claims 1 to 4, wherein the first aluminum alloy possesses a tensile strength of at most 250 MPa.

6. A crankshaft bearing assembly as defined in any one of claims 1 to 5, wherein the bearing cap (40) is secured to the crankcase by at least two bolted connections (58).

7. A crankshaft bearing assembly as defined in any one of claims 1 to 6, wherein the at least one crankshaft bearing is a crankshaft main bearing.

8. A crankshaft bearing assembly as defined in any one of claims 1 to 7, wherein the at least one crankshaft bearing includes a bearing bore, the bearing bore being split by the division of the crankshaft bearing.

9. A crankshaft bearing assembly as defined in claim 8, wherein bearing bushings are disposed within the bearing bore.

10. A crankshaft bearing assembly as defined in any one of claims 1 to 9, wherein the at least one crankshaft bearing includes a first crankshaft bearing having a first bearing cap and a second crankshaft bearing having a second bearing cap, the first and the second bearing cap being made in one piece.

11. A crankshaft bearing assembly as defined in any one of claims 1 to 10, wherein the crankcase includes lateral extensions disposed on each sides of the bearing cap, the bearing cap being bolted to the lateral extensions of the crankcase.

12. A crankshaft bearing assembly as defined in any one of claims 1 to 11, further comprising a crankcase lower half (15), at least one of an end bearing cap (38, 42) being integral with the crankcase lower half (15).

13. An internal combustion engine (100) comprising a crankshaft bearing assembly as defined in any one of claims 1 to 12, the internal combustion engine having at least two cylinders and a power unit case having a crankcase (102) and an integral transmission housing accommodating at least a transmission shaft.

14. A motorcycle (300) having an internal combustion engine, the internal combustion engine having at least two cylinders, a crankshaft (10) and a crankshaft bearing assembly (20, 22, 24) for supporting the crankshaft (10) within a power unit case having a crankcase (102) and an integral transmission housing accommodating at least a transmission shaft; the crankshaft bearing assembly including at least one crankshaft bearing (24) as defined in any one of claims 1 to 12.

15. An All-Terrain Vehicle (350) having an internal combustion engine, the internal combustion engine having at least two cylinders, a crankshaft (10) and a crankshaft bearing assembly (20, 22, 24) for supporting the crankshaft (10) within a power unit case having a crankcase (102) and an integral transmission housing accommodating at least a transmission shaft; the crankshaft bearing assembly including at least one crankshaft hearing (24) as defined in any one of claims 1 to 12.

## Patentansprüche

1. Kurbelwellenlageraufbau (20, 22, 24) zum Halten einer Kurbelwelle (10) zur Drehung um eine Kurbelwellenachse (26) in einem Motor (100) mit einem Kurbelgehäuse (102), wobei der Kurbelwellenlageraufbau (20, 22, 24) mindestens ein Kurbelwellenlager (24) aufweist, das in eine erste Hälfte (12) und eine zweite Hälfte (40) geteilt ist, wobei die erste Hälfte (12) einstückig mit dem Kurbelgehäuse (102) ausgeführt ist, und die zweite Hälfte (40) ein Lagerdeckel ist, der mit dem Kurbelgehäuse (102) verbunden werden kann; **dadurch gekennzeichnet, dass** das Kurbelgehäuse (102) aus einer ersten Aluminiumlegierung mit einer ersten Zugfestigkeit besteht, und der Lagerdeckel (40) aus einer zweiten Aluminiumlegierung mit einer zweiten Zugfestigkeit besteht, die höher als die erste Zugfestigkeit ist, wobei die zweite Zugfestigkeit der zweiten Aluminiumlegierung mindestens 300 MPa beträgt.

2. Kurbelwellenlageraufbau nach Anspruch 1, wobei die erste Aluminiumlegierung eine Gusslegierung ist und die zweite Aluminiumlegierung eine Knetlegierung ist.

3. Kurbelwellenlageraufbau nach Anspruch 1, wobei die erste Hälfte des Lagers durch Gießen hergestellt ist und die zweite Hälfte des Lagers durch Schmieden hergestellt ist.

4. Kurbelwellenlageraufbau nach einem der Ansprüche 1 bis 3, wobei die zweite Aluminiumlegierung eine Zugfestigkeit von mindestens 350 MPa besitzt.

5. Kurbelwellenlageraufbau nach einem der Ansprüche 1 bis 4, wobei die erste Aluminiumlegierung eine Zugfestigkeit von höchstens 250 MPa besitzt.

6. Kurbelwellenlageraufbau nach einem der Ansprüche 1 bis 5, wobei der Lagerdeckel (40) durch mindestens zwei Schraubverbindungen (58) am Kurbelgehäuse befestigt ist.

7. Kurbelwellenlageraufbau nach einem der Ansprüche 1 bis 6, wobei das mindestens eine Kurbelwellenlager ein Kurbelwellenhauptlager ist.

8. Kurbelwellenlageraufbau nach einem der Ansprüche 1 bis 7, wobei das mindestens eine Kurbelwellenlager eine Lagerbohrung aufweist, wobei die Lagerbohrung durch die Teilung des Kurbelwellenlagers geteilt ist.

9. Kurbelwellenlageraufbau nach Anspruch 8, wobei in der Lagerbohrung Lagerbuchsen angeordnet sind.

10. Kurbelwellenlageraufbau nach einem der Ansprüche 1 bis 9, wobei das mindestens eine Kurbelwellenlager ein erstes Kurbelwellenlager aufweist, das einen ersten Lagerdeckel aufweist, und ein zweites Kurbelwellenlager aufweist, das einen zweiten Lagerdeckel aufweist, wobei der erste und der zweite Lagerdeckel in einem Stück hergestellt sind.

11. Kurbelwellenlageraufbau nach einem der Ansprüche 1 bis 10, wobei das Kurbelgehäuse seitliche Erweiterungen aufweist, die an beiden Seiten des Lagerdeckels angeordnet sind, wobei der Lagerdeckel an die seitlichen Erweiterungen des Kurbelgehäuses geschraubt ist.

12. Kurbelwellenlageraufbau nach einem der Ansprüche 1 bis 11, ferner umfassend eine untere Hälfte (15) des Kurbelgehäuses, wobei mindestens einer aus einem Endlagerdeckel (38, 42) einstückig mit der unteren Hälfte (15) des Kurbelgehäuses ausgeführt ist.

13. Verbrennungsmotor (100), umfassend einen Kurbelwellenlageraufbau nach einem der Ansprüche 1 bis 12, wobei der Verbrennungsmotor mindestens zwei Zylinder und ein Krafteinheitsgehäuse mit einem Kurbelgehäuse (102) und einem einstückigen Getriebegehäuse, das mindestens eine Antriebswelle unterbringt, aufweist.

14. Motorrad (300) mit einem Verbrennungsmotor, wobei der Verbrennungsmotor mindestens zwei Zylinder, eine Kurbelwelle (10) und einen Kurbelwellenlageraufbau (20, 22, 24) zum Halten der Kurbelwelle (10) in einem Krafteinheitsgehäuse mit einem Kurbelgehäuse (102) und einem einstückigen Getriebegehäuse, das mindestens eine Antriebswelle unterbringt, aufweist; wobei der Kurbelwellenlageraufbau mindestens ein Kurbelwellenlager (24) nach einem der Ansprüche 1 bis 12 aufweist.

15. Geländefahrzeug (350) mit einem Verbrennungsmotor, wobei der Verbrennungsmotor mindestens zwei Zylinder, eine Kurbelwelle (10) und einen Kurbelwellenlageraufbau (20, 22, 24) zum Halten der Kurbelwelle (10) in einem Krafteinheitsgehäuse mit einem Kurbelgehäuse (102) und einem einstückigen Getriebegehäuse, das mindestens eine Antriebswelle unterbringt, aufweist; wobei der Kurbelwellenlageraufbau mindestens ein Kurbelwellenlager (24) nach einem der Ansprüche 1 bis 12 aufweist.

## Revendications

1. Ensemble de paliers de vilebrequin (20, 22, 24) destiné à supporter un vilebrequin (10) en vue d'une rotation autour d'un axe (26) de vilebrequin à l'intérieur d'un moteur thermique (100) comportant un carter de vilebrequin (102), l'ensemble de paliers de vilebrequin (20, 22, 24) incluant au moins un palier de vilebrequin (24) divisé en une première moitié (12) et une seconde moitié (40), la première moitié (12) formant une seule pièce avec le carter de vilebrequin (102) et la seconde moitié (40) étant une coiffe de palier pouvant être raccordée au carter de vilebrequin (102), **caractérisé en ce que** le carter de vilebrequin (102) est constitué d'un premier alliage d'aluminium présentant une première résistance à la traction et **en ce que** la coiffe de palier (40) est constituée d'un second alliage d'aluminium présentant une seconde résistance à la traction supérieure à la première résistance à la traction, la seconde résistance à la traction du second alliage d'aluminium étant d'au moins 300 MPa.

2. Ensemble de paliers de vilebrequin selon la revendication 1, dans lequel le premier alliage d'aluminium est un alliage coulé et le second alliage d'aluminium est un alliage de corroyage.

3. Ensemble de paliers de vilebrequin selon la revendication 1, dans lequel la première moitié du palier est réalisée par coulage et la seconde moitié du palier est réalisée par forgeage.

4. Ensemble de paliers de vilebrequin selon l'une quelconque des revendications 1 à 3, dans lequel le second alliage d'aluminium possède une résistance à la traction d'au moins 350 MPa.

5. Ensemble de paliers de vilebrequin selon l'une quelconque des revendications 1 à 4, dans lequel le premier alliage aluminium possède une résistance à la traction d'au plus 250 MPa.

6. Ensemble de paliers de vilebrequin selon l'une quelconque des revendications 1 à 5, dans lequel la coiffe de palier (40) est fixée au carter de vilebrequin par au moins deux raccordements boulonnés (58).

7. Ensemble de paliers de vilebrequin selon l'une quelconque des revendications 1 à 6, dans lequel au moins un palier de vilebrequin est un palier principal de vilebrequin.

8. Ensemble de paliers de vilebrequin selon l'une quelconque des revendications 1 à 7, dans lequel au moins un palier de vilebrequin inclut un alésage de palier, l'alésage de palier étant fractionné par la division du palier de vilebrequin.

9. Ensemble de paliers de vilebrequin selon la revendication 8, dans lequel des coussinets de palier sont disposés à l'intérieur de l'alésage de palier.

10. Ensemble de paliers de vilebrequin selon l'une quelconque des revendications 1 à 9, dans lequel au moins un palier de vilebrequin inclut un premier palier de vilebrequin comportant une première coiffe de palier et un second palier de vilebrequin comportant une seconde coiffe de palier, la première et la seconde coiffe de palier étant réalisées d'une seule pièce.

11. Ensemble de paliers de vilebrequin selon l'une quelconque des revendications 1 à 10, dans lequel le carter de vilebrequin inclut des extensions latérales placées sur chaque côté de la coiffe de palier, la coiffe de palier étant boulonnée sur les extensions latérales du carter de vilebrequin.

12. Ensemble de paliers de vilebrequin selon l'une quelconque des revendications 1 à 11, comprenant en outre une moitié inférieure (15) de carter de vilebrequin, au moins l'une d'une coiffe d'extrémité de palier (38, 42) étant formée d'une seule pièce avec la moitié inférieure (15) de carter de vilebrequin.

13. Moteur à combustion interne (100) comprenant un ensemble de paliers de vilebrequin tel que défini dans l'une quelconque des revendications 1 à 12, le moteur à combustion interne possédant au moins deux cylindres et un carter d'unité de puissance comportant un carter de vilebrequin (102) ainsi qu'un boîtier de transmission intégré recevant au moins un arbre de transmission.

14. Motocyclette (300) comportant un moteur à combustion interne, le moteur à combustion interne possédant au moins deux cylindres, un vilebrequin (10) et un ensemble de paliers de vilebrequin (20, 22, 24) destiné à supporter le vilebrequin (10) à l'intérieur d'un carter d'unité de puissance comportant un carter de vilebrequin (102) ainsi qu'un boîtier de transmission intégré recevant au moins un arbre de transmission, l'ensemble de paliers de vilebrequin incluant au moins un palier de vilebrequin (24) tel que défini dans l'une quelconque des revendications 1 à 12.

15. Véhicule tout terrain (350) comportant un moteur à combustion interne, le moteur à combustion interne possédant au moins deux cylindres, un vilebrequin (10) et un ensemble de paliers de vilebrequin (20, 22, 24) destiné à supporter le vilebrequin (10) à l'intérieur d'un carter d'unité de puissance comportant un carter de vilebrequin (102) et un boîtier de transmission intégré recevant au moins un arbre de transmission, l'ensemble de paliers de vilebrequin incluant au moins un palier de vilebrequin (24) tel que défini dans l'une quelconque des revendications 1 à 12.
